# EUROPÄISCHE PATENTANMELDUNG

(11) **EP 0 791 448 A2**
(43) Veröffentlichungstag der Anmeldung: **27.08.1997**
(21) Anmeldenummer: 97102508.5
(22) Anmeldetag: 17.02.1997
(51) Int. Cl.: B29C 45/38, B29C 45/27

(54) **Verfahren und Vorrichtung zum Spritzgiessen von Kunststoffteilen**

(30) Priorität: 26.02.1996 DE 19607213; 12.04.1996 DE 19614532; 03.05.1996 DE 19617768
(71) Anmelder: HERBST, Richard, D-85386 Eching (DE)
(72) Erfinder: HERBST, Richard, D-85386 Eching (DE)
(74) Vertreter: Witte, Alexander, Dr.-Ing.

(57) **Zusammenfassung**

Ein Verfahren und eine Vorrichtung dienen zum Spritzgießen von Kunststoffteilen. Eine Kunststoffschmelze (32) wird aus einem Angußkanal (20) über eine Öffnung (22) in einen Formhohlraum (14) eines Werkzeugs (10) eingespritzt. Nach dem Befüllen des Formhohlraums (14) mit Kunststoffschmelze (32) wird die Kunststoffschmelze (32) entlang der oder quer zur Öffnung (22) abgeschert. Im Angußkanal (20) ist ein Ventilkörper, insbesondere ein Kolben (25), angeordnet, der über die oder quer zur Öffnung (22) führbar ist.

## Beschreibung

Die Erfindung betrifft ein Verfahren zum Spritzgießen von Kunststoffteilen, bei dem eine Kunststoffmasse aus einem Angußkanal über eine Öffnung in einen Formhohlraum eines Werkzeugs eingespritzt wird, wobei nach dem Befüllen des Formhohlraums mit der Kunststoffmasse die Kunststoffmasse mittels einer über die Öffnung hinweg führbaren Steuerkante abgeschert wird.

Die Erfindung betrifft ferner ein Werkzeug zum Spritzgießen von Kunststoffteilen mit einem Formhohlraum, der über mindestens eine Öffnung mit einem Angußkanal in Verbindung steht, wobei der Angußkanal mit einem Kunststoff-Spritzgießaggregat verbindbar ist, und wobei ferner zum Abscheren der Kunststoffmasse nach dem Befüllen des Formhohlraumes eine Steuerkante über die Öffnung hinwegführbar ist.

Die Erfindung betrifft schließlich ein Werkzeug zum Spritzgießen von Kunststoffteilen mit einer ersten Werkzeughälfte und mit einer zweiten Werkzeughälfte, die im geschlossenen Zustand des Werkzeugs entlang einer Trennebene aneinanderliegen und einen Formhohlraum zwischen sich einschließen, der über mindestens eine Öffnung mit einem Angußkanal in Verbindung steht, wobei der Angußkanal mit einem Kunststoff-Spritzgießaggregat verbindbar ist, und Mittel zum Unterbrechen der Verbindung zwischen dem Kunststoff-Spritzgießaggregat und dem Formhohlraum vorgesehen sind.

Ein Verfahren und Werkzeuge der vorstehend genannten Art sind aus der DE-A1-37 07 362 bekannt.

Wenn Kunststoffteile in Werkzeugen der vorstehend genannten Art durch Spritzgießen hergestellt werden, ergibt sich das Problem, einen möglichst unsichtbaren Anguß herzustellen. Wenn nämlich der Formhohlraum aus dem Angußkanal über die Öffnung mit der Kunststoffschmelze befüllt wird und die Kunststoffschmelze anschließend im Formhohlraum erstarrt, so muß beim Auswerfen des fertigen Kunststoffteils der durch die Öffnung hindurchreichende Kunststoffstrang abgetrennt werden. Dies kann durch Abreißen, Abschneiden und dgl. geschehen.

Durch den Anguß entsteht eine Unregelmäßigkeit in der ansonsten glatten Oberfläche des Kunststoffteils. Dies wird von den Abnehmern der Kunststoffteile in der Regel nicht gewünscht. Dies gilt vor allem dann, wenn der Anguß im Bereich einer Sichtkante liegt, insbesondere wenn die Kunststoffteile z.B. zu Reklamezwecken eingesetzt werden sollen. Ein Beispiel hierfür sind sogenannte Smart Cards. Die vorliegende Erfindung befaßt sich vorzugsweise, aber nicht ausschließlich mit diesem Anwendungsbereich bei Smart Cards. Unter einer Smart Card versteht man eine ein- oder doppelseitig kaschierte Kunststoffkarte, die üblicherweise mit Hinweis- und/oder Werbeaufdrucken und/oder mit Sicherheitsmerkmalen, z.B einem Hologramm, einem Magnetstreifen, einem Foto des Karteninhabers oder dgl., versehen ist. In die Smart Card ist ein sogenanntes Modul eingebettet. Das Modul besteht aus einem elektronischen Schaltkreis (Chip) sowie üblicherweise einem Trägerplättchen, auf dem der Chip sitzt. Das Plättchen bildet bei bestimmten Karten mit mehreren Oberflächensegmenten elektrische Kontakte, die von außen zugänglich sind. Derartige Smart Cards werden als Telefonkarten, Berechtigungskarten für mobile Nachrichtengeräte, als Scheckkarten im Geldverkehr, als Berechtigungsnachweise für Krankenkassen oder dgl., als Berechtigungsnachweis für den Zugang in bestimmte Gebäude oder Gebäudeteile und für andere Zwecke, z.B. zur Warensicherung, eingesetzt.

Zum Herstellen der Smart Cards wird ein Kunststoff-Spritzgießverfahren eingesetzt. Hierzu dient ein Werkzeug, das üblicherweise aus zwei oder mehreren Teilen, sogenannten Werkzeughälften, besteht. Ein im Werkzeug vorgesehener Hohlraum hat die flache, quaderförmige Gestalt der Smart Card. Herkömmlicherweise wird das Kunststoffmaterial in einem üblichen Spritzgießaggregat verflüssigt und die Kunststoffschmelze wird dann über eine Öffnung in den Hohlraum eingespritzt. Bei der Herstellung von Smart Cards ist die Öffnung vorzugsweise als Angußschlitz ausgebildet, der sich im Bereich einer Schmalseite des Hohlraums befindet. Man spricht in diesem Fall von einem Filmanguß.

Aus der EP-B1-0 399 868 ist ein Verfahren zum Herstellen einer Smart Card bekannt. Bei diesem bekannten Verfahren geht der Schlitz an der Schmalseite des Formhohlraums in einen sich in Verlängerung des Formhohlraums befindlichen Hilfshohlraum über. In diesen Hilfshohlraum wiederum mündet ein kegelstumpfförmiger Zuführkanal, dessen Achse senkrecht zur flachen Oberfläche des Formhohlraums gerichtet ist. Die Kunststoffschmelze fließt durch diesen Zuführkanal in den Hilfshohlraum hinein, wird dann um 90° abgelenkt und fließt dann durch den Angußschlitz in den Formhohlraum.

In der Praxis der Herstellung von Smart Cards ist es darüber hinaus bekannt, den Zuführkanal unmittelbar an eine flache Oberfläche des Formhohlraums anzuschließen. Wenn keine weiteren Maßnahmen getroffen werden, ergibt sich dann das Problem, daß nach dem vollständigen Einleiten der Kunststoffschmelze in den Formhohlraum ein sogenannter Anguß verbleibt, der beim Entformen der Smart Card stört. Selbst wenn dieser Anguß beim Entformen der Smart Card oder danach entfernt wird, bspw. durch Abbrechen oder Abschneiden, verbleibt eine Unregelmäßigkeit in der Oberfläche, die von den Abnehmern der Smart Card als Störung empfunden wird.

Es ist daher versucht worden, dieses Problem dadurch zu beseitigen, daß man in den auf die flache Oberfläche des Formhohlraums gerichteten Zuführkanal ein Nadelventil eingesetzt hat. Das Nadelventil umfaßt eine Zuführhülse, in deren Achse eine Nadel läuft. Während des Einspritzvorganges befindet sich die Nadel in einer zurückgezogenen Stellung. Die Kunststoffschmelze strömt in axialer Richtung seitlich an der Nadel vorbei und fließt dann vor der Spitze der Nadel durch die Öffnung in den Formhohlraum hinein. Sobald der Formfüllvorgang und der Nachdrückvorgang abgeschlossen sind, wird die Nadel fremdkraftbetätigt nach vorne verschoben, so daß ihre vorne abgeflachte Spitze die Öffnung zum Formhohlraum verschließt. Zwar läßt sich auf diese Weise theoretisch erreichen, daß die Innenoberfläche des Formhohlraums nahezu homogen ist, wenn die abgeflachte Spitze der Nadel sich bündig in die Öffnung zum Formhohlraum einfügt, in der Praxis ist dies jedoch deswegen nicht erreichbar, weil sowohl die Hülse des Nadelventils im Bereich der Öffnung als auch die Nadel selbst Verschleißteile sind, die sich bereits nach verhältnismäßig kurzer Zeit abnutzen. Die Folge dieses Verschleißes ist dann, daß erneut Unregelmäßigkeiten in der Oberfläche der fertig gespritzten Smard Card auftreten.

Die vorliegende Erfindung ist aber keinesfalls auf das Einsatzgebiet bei Smart Cards eingeschränkt. Die Erfindung kann vielmehr bei Kunststoffteilen aller Art eingesetzt werden, bei denen es um eine besonders hochwertige Oberfläche ohne Unregelmäßigkeiten geht. Beispiele dafür sind Boxen für Compact Disks, Hüllen für Floppy Disks, aber auch technisch hochwertige Kunststoffteile aller Art, wie z.B. Räder, Scheiben, Verschlußkappen und dgl. mehr.

Ein weiteres Problem beim Spritzgießen von Kunststoffteilen besteht darin, daß die flüssige Kunststoffschmelze nach dem Einspritzen in den Formhohlraum langsam abkühlt und während des Abkühlens schrumpft. Diese Schrumpfung, die einer Volumenverminderung entspricht, erfordert es, während des Abkühlungsvorganges noch etwas Kunststoffschmelze "nachzudrücken", damit der Formhohlraum auch bei abgekühlter Kunststoffschmelze vollständig befüllt ist, so daß keine Einfallstellen vorhanden sind und die gewünschte Maßhaltigkeit erreicht wird. Aus diesem Grunde stellt sich der Druck beim Einspritzen der Kunststoffschmelze zunächst ansteigend ein, bis vor dem Maximum der Druckkurve die sogenannte Nachdrückphase beginnt. Nach Überschreiten eines Druckmaximums klingt der Druck dann langsam ab, weil die Kunststoffschmelze dann allmählich abkühlt und erstarrt. Unter "allmählich" ist dabei freilich ein relativ zügiger Zeitablauf zu verstehen, weil Kunststoffteile der hier interessierenden Art als Masseprodukte mit schnellen Zykluszeiten im Sekundenbereich hergestellt werden.

Aus der eingangs genannten DE-A1-37 07 362 ist ein Spritzgußwerkzeug zur Herstellung eines Kunststoffteiles mit definierter Fläche im Angußbereich, nämlich eines maßgetreuen, flächigen und winkelgerechten Probestabes für automatisierte Prüfmaschinen, bekannt.

Das bekannte Spritzgußwerkzeug besteht aus zwei Werkzeughälften. In einer ersten Werkzeughälfte sind parallel nebeneinander ein erster Angußkanal sowie rechts und links davon jeweils ein länglicher Formhohlraum angeordnet. Die beiden Formhohlräume, nicht jedoch der erste Angußkanal, münden an ihrem oberen Ende in radialer Richtung in eine Führung, in der ein Schieber axial beweglich angeordnet ist. Der Schieber ist mit einem axial verlaufenden Kanalstück versehen, das an seinen beiden Enden radial aus dem Schieber herausgeführt ist, und zwar derart, daß diese beiden Öffnungen des Kanalstücks in einer bestimmten Stellung des Schiebers mit den beiden Formhohlräumen fluchten. Zur Verbindung des ersten Angußkanals mit dem als zweiter Angußkanal wirkenden Kanalstück im Schieber ist in der anderen Werkzeughälfte ein als Überlauf bezeichneter Hohlraum angeordnet, der im geschlossenen Zustand des Werkzeugs sowohl das obere Ende des ersten Angußkanals wie auch das als zweiter Angußkanal wirkende Kanalstück im Schieber überlappt.

Beim Einspritzen der flüssigen Kunststoffschmelze fließt diese durch den ersten Angußkanal, den Überlauf, und dann über den zweiten Angußkanal in die beiden Formhohlräume. Wenn die beiden Formhohlräume befüllt sind, wird mittels des Spritzgießaggregates selbst ein Nachdruck ausgeübt und zugleich der Schieber axial verschoben. Dies geschieht, wenn der Kunststoff eine Temperatur etwa 10 % bis 20 % unterhalb der Glaspunkttemperatur hat, also bereits teilweise erstarrt ist. Der Kunststoff ist daher zu diesem Zeitpunkt nicht mehr flüssig, also keine Schmelze. Durch das Verschieben des Schiebers wird die teilweise erstarrte Kunststoffmasse im Übergang zwischen dem zweiten Angußkanal und den beiden Formhohlräumen abgeschert, da die Steuerkanten an den Seiten der Öffnungen des zweiten Angußkanals in die Formhohlräume über diese Öffnungen herübergeführt werden.

Bei diesem Spritzgußwerkzeug handelt es sich um ein sogenanntes "Kaltkanalwerkzeug". Dies bedeutet, daß nach dem Öffnen des Spritzgußwerkzeugs ein Angußstück im geöffneten Werkzeug erstarrt und separat ausgeworfen werden muß. Bei dem Angußstück handelt es sich um das Volumen des ersten Angußkanals, des Überlaufs sowie des zweiten Angußkanals.

Das bekannte Spritzgußwerkzeug hat damit den Nachteil, daß es aufgrund der Bauart als Kaltkanalwerkzeug bei jedem Spritzzyklus mit einem gewissen Materialverlust in Gestalt des Angußstücks verbunden ist, daß zum Entfernen des Angußstücks zusätzliche Maßnahmen getroffen werden müssen.

Aus der DE-A-28 55 144 sind ein Verfahren und eine Vorrichtung zum Formen von Kunststoffgegenständen bekannt.

In dieser Druckschrift ist die Herstellung von "Külbeln" beschrieben. Hierunter versteht man üblicherweise sogenannte "Preforms", d.h. Halbzeuge aus Kunststoff, die als Großserienteil in immer gleicher Größe hergestellt werden und später, insbesondere durch Blastechniken, zu Behältern unterschiedlicher Art umgeformt werden.

Bei der beschriebenen Vorrichtung wird ein Niederdruck-Plastifizierer eingesetzt, der über eine Abgabeöffnung mit einem Spritzzylinder verbunden ist. Der Spritzzylinder ist an seinem einen axialen Ende mit einer Kolbenanordnung versehen. An seinem anderen axialen Ende geht radial eine Gießöffnung ab, die zu einem separat verfahrbaren Formnest führt. Die Anordnung ist dabei so getroffen, daß die Gießöffnung an der Stelle in den Formkörper einmündet, an der sich die obere Spitze des herzustellenden Preforms befindet.

Die Kunststoffschmelze wird im Niederdruck-Plastifizierer zum Schelzen gebracht und dann unter niedrigem Druck in den Spritzzylinder eingefüllt. Die Abgabeöffnung des Plastifizierers liegt dabei in der Nähe desjenigen Endes des Spritzzylinders an dem sich die Kolbenanordnung befindet. Wenn der Spritzzylinder gefüllt ist, fährt der Kolben nach vorne und überdeckt damit zunächst die Abgabeöffnung des Plastifizierers, so daß dieser abgeschlossen ist. Beim weiteren Vorfahren des Kolbens wird die im Spritzzylinder enthaltene Kunststoffschmelze am gegenüberliegenden Ende des Spritzzylinders in eine radiale Richtung umgelenkt und fließt über die Gießöffnung in den Hohlraum des beweglichen Formnests.

Da der Spritzkolben am gegenüberliegenden axialen Ende des Spritzzylinders auf die dort befindliche Stirnwand aufsetzt, gleitet er zumindest teilweise an der sich dort in radialer Richtung befindlichen Gießöffnung vorbei.

Der bewegliche Formkörper wird nun vom Spritzzylinder abgetrennt und zu einer an anderer Stelle im Raum befindlichen Druckanordnung überführt. Diesse Druckanordnung weist eine Druckstange auf, die in die Gießöffnung des beweglichen Formkörpers eingeführt wird, um die im beweglichen Formkörper befindliche, noch flüssige Kunststoffschmelze nachzudrücken.

Demzufolge wird die Formgebung des Preforms nicht durch den Spritzkolben bestimmt, und es gibt zumindest an dieser Stelle, nämlich der Spitze des Preforms, auch keine Anforderungen hinsichtlich der Oberflächenqualität oder Formtreue des Preforms, da dieser, wie bereits erwähnt, bestimmungsgemäß einem weiteren thermoplastischen Verformungsvorgang unterzogen wird.

Der Erfindung liegt demgegenüber die Aufgabe zugrunde, ein Verfahren und Werkzeuge der eingangs genannten Art dahingehend weiterzubilden, daß einerseits Angußstellen mit optimaler Oberflächenausbildung erzielt werden, die beim entformten Kunststoffteil mit unbewaffnetem Auge überhaupt nicht erkennbar sind, andererseits aber die Kunststoffteile in einer Heißkanaltechnik hergestellt werden können, bei der keinerlei Angußstücke entstehen und damit weder Materialverluste auftreten, noch eine Verlängerung der Zykluszeit dadurch, daß die Angußstücke separat entfernt werden müssen.

Bei einem Verfahren der eingangs zunächst genannten Art wird diese Aufgabe erfindungsgemäß dadurch gelöst, daß die Kunststoffschmelze mittels eines im Angußkanal verschiebbaren und mit der Steuerkante versehenen Kolbens abgeschert wird.

Bei einem Werkzeug der eingangs zunächst genannten Art wird die der Erfindung zugrundeliegende Aufgabe dadurch gelöst, daß im Angußkanal ein mit der Steuerkante versehener Kolben verschiebbar angeordnet ist, der über die Öffnung hinwegführbar ist.

Bei einem Werkzeug der eingangs als zweites genannten Art ist eine Betätigungseinheit für die Unterbrechungsmittel in der ersten Werkzeughälfte angeordnet und das Kunststoff-Spritzgießaggregat ist an die zweite Werkzeughälfte angeschlossen.

Die der Erfindung zugrundeliegende Aufgabe wird auf diese Weise vollkommen gelöst. Erfindungsgemäß wird nämlich nicht nur die sehr hohe Oberflächenqualität erreicht, die in an sich bekannter Weise durch Abscheren des Kunststoffstranges im noch plastischen Zustand am Übergang zum Formhohlraum selbst erreicht wird, im Gegensatz zum Stand der Technik ist es vielmehr möglich, diese Vorteile mit den Vorteilen der Heißkanaltechnik und deren bereits erwähnten Vorteilen zu verbinden. Während nämlich beim bekannten Spritzgußwerkzeug gemaß DE-A1-37 07 362 nach dem Öffnen des Werkzeugs, d.h. nach dem Auseinanderfahren der beiden Werkzeugteile, die Schmelze führenden Kanäle und Hohlräume offenliegen und die darin befindlichen Schmelzereste somit erstarrt sein müssen, ermöglicht es die vorliegende Erfindung, das gesamte Werkzeug auf der Seite der flüssigen Schmelze nach dem Öffnen des Werkzeugs vollständig zu verschließen. Da somit außer dem im Formhohlraum befindlichen Kunststoff, der das Werkstück selbst bildet, keine heiße Kunststoffschmelze mit dem Außenraum in Verbindung tritt, entsteht auch kein Angußstück, das mit zusätzlichem apparativem und zeitlichem Aufwand abgekühlt und entformt und entsorgt werden müßte.

Unter "Befüllen" ist dabei auch ein teilweises Befüllen des Formhohlraums zu verstehen, wie dies zum Beispiel beim Schaumspritzen und beim Spritzprägen praktiziert wird.

Ferner ist unter "entlang der" bzw. "quer zur" Öffnung dabei jedweder Abschervorgang zu verstehen, bei dem eine Abscherkante entlang der von der Öffnung aufgespannten Fläche geführt wird, so daß der Vektor der Bewegung in dieser Fläche liegt.

Bei einer bevorzugten Ausgestaltung des erfindungsgemäßen Verfahrens stömt die Kunststoffschmelze in einer ersten axialen Richtung in den Angußkanal ein, und der Kolben ist zum Abscheren der Kunststoffschmelze in der entgegengesetzten, zweiten axialen Richtung verschiebbar.

Das Werkzeug ist zu diesem Zweck so ausgebildet, daß der Angußkanal aus einer ersten axialen Richtung mit der Kunststoffschmelze beschickbar ist, und daß der Kolben zum Abscheren der Kunststoffschmelze in der entgegengesetzten, zweiten axialen Richtung über die Öffnung hinwegführbar ist.

Bei einer bevorzugten praktischen Ausbildung dieses Ausführungsbeispiels besteht das Werkzeug in an sich bekannter Weise aus mindestens zwei Werkzeughälften, wobei eine Betätigungseinrichtung für den Kolben in der einen Werkzeughälfte angeordnet und eine Kunststoff-Spritzgießeinheit an die andere Werkzeughälfte angeschlossen ist.

Diese Maßnahmen haben den Vorteil, daß die beiden Funktionen des Werkzeugs, nämlich die Betätigung des Kolbens einerseits und die Zuführung der flüssigen Kunststoffschmelze andererseits in zwei verschiedene Bereiche des Werkzeugs, insbesondere auf die beiden verschiedenen Werkzeughälften verteilt wird. Während die Betätigungseinheit sich zum Beispiel auf der "kalten" Werkzeughälfte befindet, ist die "warme" Werkzeughälfte von solchen Betätigungseinheiten frei. Dies hat den Vorteil, daß die auf der "warmen" Werkzeughälfte zwangsläufig auftretenden unterschiedlichen Wärmeausdehnungen infolge ungleichmäßiger Erwärmung nicht hinderlich für die Betätigungseinrichtungen auftreten können. Außerdem ergibt sich der Vorteil, daß das Werkzeug klein gebaut werden kann, da der Mindestabstand zwischen den Formhohlräumen nur durch die Größe der Kunststoffteile und nicht durch die des Antriebes für den Kolben vorgegeben ist.

Bei einer weiteren Ausführungsform der Erfindung weist der Kolben eine Längsnut auf und ist um seine Längsachse drehbar angeordnet.

Diese Maßnahme hat den Vorteil, daß ebenfalls ein Heißkanalsystem in der bereits beschriebenen Weise realisiert werden kann, wobei statt einer axialen Verschiebung des Kolbens eine Verdrehung des Kolbens bewirkt wird, was im Einzelfall günstiger sein kann.

In jedem Falle, also unabhängig davon, ob der Kolben axial verschoben oder um seine Längsachse gedreht wird, ist einerseits eine Offenstellung erzielbar, in der die Kunststoffschmelze durch die Öffnung frei in den Formhohlraum einströmen kann. Andererseits kann aber ein zuverlässiger Verschluß der Öffnung in der beschriebenen Weise erreicht werden.

Bei einer weiteren Gruppe von Ausführungsbeispielen wird die Kunststoffschmelze nachgedrückt und zugleich abgeschert. Vorzugsweise wird die Kunststoffschmelze nach dem Befüllen des Formhohlraums und vor dem Abscheren nachgedrückt.

Dies geschieht bevorzugt dadurch, daß der Kolben als Kolbenanordnung mit einem auf einer zentralen Stange laufenden Ringkolben ausgebildet ist, wobei die Stange und der Ringkolben separat axial betätigbar sind, und daß Mittel zum Absperren der Verbindung zwischen Angußkanal und Kunststoff-Spritzgießaggregat vorgesehen sind.

Diese Maßnahmen haben den Vorteil, daß ein Volumenausgleich (ein sogenanntes "Nachdrücken" der Kunststoffschmelze beim Abkühlen bzw. Erstarren) möglich ist, bevor der Kolben die Öffnung vollkommen überdeckt. Das Absperren der Verbindung hat ferner den Vorteil, daß im Bereich des Kunststoff-Spritzgießaggregates bereits die Schmelze für den nächsten Einspritzvorgang plastifiziert werden kann, während das zuvor gespritzte Kunststoffteil noch abkühlt und erstarrt. Auf diese Weise kann die Zykluszeit vermindert werden.

Bei einem weiteren Ausführungsbeispiel der Erfindung wird die Öffnung während des Abschervorganges mit einer durchgehenden Oberfläche verschlossen.

Diese Maßnahme hat den Vorteil, daß die Öffnung mittels einer völlig homogenen Fläche abgedeckt werden kann. Wenn die Öffnung im Bereich einer Durchdringung von Angußkanal und Formhohlraum ausgebildet ist, kann auf diese Weise eine störungsfreie Oberfläche des Kunststoffteils erreicht werden. Insbesondere werden auf diese Weise diejenigen Kanäle im Werkzeug, die flüssige Kunststoffschmelze führen, vollkommen abgedeckt, so daß die bereits mehrfach erwähnte Funktion als Heißkanalwerkzeug gewährleistet werden kann.

Durch geeignete Dimensionierung der zuvor beschriebenen Elemente kann gemäß einer Weiterbildung des erfindungsgemäßen Verfahrens während des Einspritzens der Kunststoffschmelze die Größe der Öffnung auf einfache Weise eingestellt werden.

Man macht sich dabei in vorteilhafter Weise die Tatsache zunutze, daß es sich bei der eingesetzten Anordnung um eine Ventilanordnung handelt, bei der der Durchströmquerschnitt durch Verfahren der Steuerkante eingestellt werden kann. Auf diese Weise kann der Strom der Kunststoffschmelze und damit indirekt auch der dynamische Druck der Kunststoffschmelze im Formhohlraum eingestellt werden.

Die Einstellbarkeit der Öffnung hat einen weiteren wesentlichen Vorteil bei sogenannten Mehrfach-Werkzeugen, die mehrere Formhohlräume gleicher oder unterschiedlicher Form aufweisen. Bei diesen Mehrfach-Werkzeugen kann in der Praxis eine zeitgleiche Befüllung der Formhohlräume nicht erreicht werden, vielmehr füllen sich die einen Formhohlräume eher als die anderen. Wenn es nun nach dem genannten Ausführungsbeispiel der Erfindung mit einstellbarer Öffnung möglich ist, den Befüllungsvorgang eines jeden Formhohlraums individuell einzustellen, so kann das vorstehend geschilderte Problem vermieden werden. Man wird dann in der Praxis einen "Probeschuß" ausführen, bei dem die Öffnungen aller Formhohlräume ganz geöffnet sind. Wenn man dann den Füllzustand prüft, kann man entsprechend die Öffnungen individuell so verkleinern, daß bei nachfolgenden Spritzvorgängen eine zeitgleiche und damit gleichmäßige Befüllung aller Formhohlräume erreicht wird.

Bei einer Ausgestaltung des erfindungsgemäßen Werkzeugs kann dies zum Beispiel dadurch erreicht werden, daß der Kolben eine mit der Öffnung in Verbindung bringbare Mündung umfaßt, wobei die Mündung durch Bewegung des Kolbens in teilweise Überlappung mit der Öffnung bringbar ist.

Bei einer weiteren Gruppe von Ausführungsbeispielen wird die Kunststoffschmelze vor dem Einspritzen durch die Öffnung vermischt und dadurch homogenisiert.

Dies geschieht bevorzugt dadurch, daß der Kolben an seiner von der Kunststoffschmelze angeströmten Seite mit Mischelementen versehen ist, insbesondere mit einer Schnecke oder mit radialen Mischflügeln oder mit einem Mischsieb.

Diese Maßnahmen haben den Vorteil, daß die anströmende Kunststoffschmelze homogenisiert wird, ehe sie durch die Öffnung in den Formhohlraum eintritt.

Bei weiteren bevorzugten Ausgestaltungen der Erfindung kann der Angußkanal nach dem Befüllen des Formhohlraums verschlossen werden.

Dies geschieht beispielsweise dadurch, daß der Kolben im Angußkanal gegen einen Anschlag anlegbar ist. Vor allem aber kann der Angußkanal einen Riegel für den Kolben aufweisen.

Diese Maßnahmen haben den Vorteil, daß der Kolben nach Beendigung des Einspritzvorganges in derjenigen Werkzeughälfte verbleiben kann, in der die beheizten Kanäle angeordnet sind, d.h. der Werkzeughälfte, an die das Kunststoff-Spritzgießaggregat angeschlossen ist. Der Kolben wird zu diesem Zweck in den Angußkanal auf der Seite dieser "warmen" Werkzeughälfte eingeschoben und dort mittels eines Anschlages oder eines Riegels verrastet oder hält von selbst. Für einen erneuten Spritzgießvorgang kann der Kolben dann bei erneut geschlossenem Werkzeug durch den Druck der anströmenden Kunststoffschmelze wieder in die andere Werkzeughälfte zurückgeschoben werden. Der Verschluß der Öffnung wird dadurch wieder geöffnet.

Bei einer bestimmten Gruppe von Ausführungsbeispielen weist der Kolben einen im wesentlichen axial verlaufenden Kanal auf, der an einem Ende mit dem Angußkanal und an seinem anderen Ende mit der Öffnung zum Formhohlraum verbindbar ist.

Eine besonders gute Wirkung wird erzielt, wenn die Öffnung als Ringspalt ausgebildet ist.

Diese Maßnahme hat den Vorteil, daß vor allem solche Kunststoffteile gespritzt werden können, die über eine runde oder unrunde Durchgangsbohrung verfügen. An der Stelle, wo sich die Durchgangsbohrung im fertigen Teil befindet, kann nämlich der Kolben bzw. der Angußkanal im Werkzeug verlaufen. Man erhält dann ein Kunststoffteil, an dem der Anguß überhaupt nicht mehr erkennbar ist.

Bei einer ähnlichen Gruppe von Ausführungsbeispielen wird die Kunststoffschmelze aus dem Angußkanal gleichzeitig über mehrere Öffnungen in mehrere Formhohlräume eingespritzt. Zu diesem Zweck ist die Öffnung als eine Mehrzahl von Einzelöffnungen ausgebildet.

Diese Maßnahmen haben den Vorteil, daß eine Vielzahl von Kunststoffteilen gleichzeitig mit einer Mindestzahl von Zuführeinrichtungen hergestellt werden kann.

Weiterhin ist bevorzugt, wenn eine gemeinsame Betätigungseinheit für eine Mehrzahl von Kolben vorgesehen ist.

Diese Maßnahme hat den Vorteil, daß nur eine einzige Betätigungseinheit für eine Vielzahl von Kolben erforderlich ist. Bei einer praktischen Ausführungsform kann dies zum Beispiel über eine gemeinsame Betätigungsplatte geschehen, wie sie in ähnlicher Form bereits zur Betätigung einer Vielzahl von Auswerferstiften am Werkzeug bekannt ist.

Wie bereits erwähnt wurde, läßt sich die Erfindung mit Vorteil bei einer Vielzahl von Anwendungsfällen einsetzen. Besonders bevorzugt im Rahmen der vorliegenden Erfindung ist jedoch - ohne daß damit die Erfindung beschränkt wird - das Anwendungsgebiet der Herstellung von Scheckkarten, insbesondere der sogenannten Smart Cards. Der Formhohlraum weist daher bevorzugt die Gestalt einer Scheckkarte auf.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegende Erfindung zu verlassen.

Ausführungsbeispiele der Erfindung sind in der Zeichnung dargestellt und werden in der nachfolgenden Beschreibung näher erläutert. Es zeigen:
- Fig. 1: in stark vergrößertem Maßstab eine seitliche Schnittdarstellung eines Ausführungsbeispiels eines erfindungsgemäßen Werkzeugs;
- Fig. 2: das Werkzeug von Fig. 1, jedoch in einer anderen Betriebsstellung;
- Fig. 3: eine Darstellung, ähnlich Fig. 1, jedoch für ein zweites Ausführungsbeispiel der Erfindung;
- Fig. 4: eine Darstellung, ähnlich Fig. 3, jedoch für ein drittes, demgegenüber leicht abgewandeltes Ausführungsbeispiel der Erfindung;
- Fig. 5: eine Darstellung, ähnlich Fig. 1, jedoch für ein viertes Ausführungsbeispiel der Erfindung;
- Fig. 6: eine Darstellung, ähnlich Fig. 5, jedoch für ein fünftes, gegenüber Fig. 5 leicht abgewandeltes Aussführungsbeispiel;
- Fig. 7: eine Darstellung, ähnlich Fig. 1, jedoch für ein sechstes Ausführungsbeispiel der Erfindung;
- Fig. 8: eine Darstellung, ähnlich Fig. 1, jedoch für ein siebtes Ausführungsbeispiel der Erfindung;
- Fig. 9: eine Darstellung, ähnlich Fig. 1, jedoch für ein achtes Ausführungsbeispiel der Erfindung;
- Fig. 10: eine Darstellung, ähnlich Fig. 1, jedoch für ein neuntes Ausführungsbeispiel der Erfindung;
- Fig. 11: eine perspektivische Darstellung eines Gegenstandes, wie er mit dem Werkzeug gemäß Fig. 10 hergestellt werden kann;
- Fig. 12: eine Schnittdarstellung entlang der Linie XII-XII von Fig. 10;
- Fig. 13: in wesentlich kleinerem Maßstab eine Seitendarstellung, im Schnitt, eines zehnten Ausführungsbeispiels der Erfindung;
- Fig. 14: eine Schnittdarstellung entlang der Linie XIV-XIV von Fig. 13, jedoch in der Zeichenebene um 90° gedreht; und
- Fig. 15: eine perspektivische Darstellung zur Erläuterung einer Variante des zehnten Ausführungsbeispiels gemäß Fig. 13.

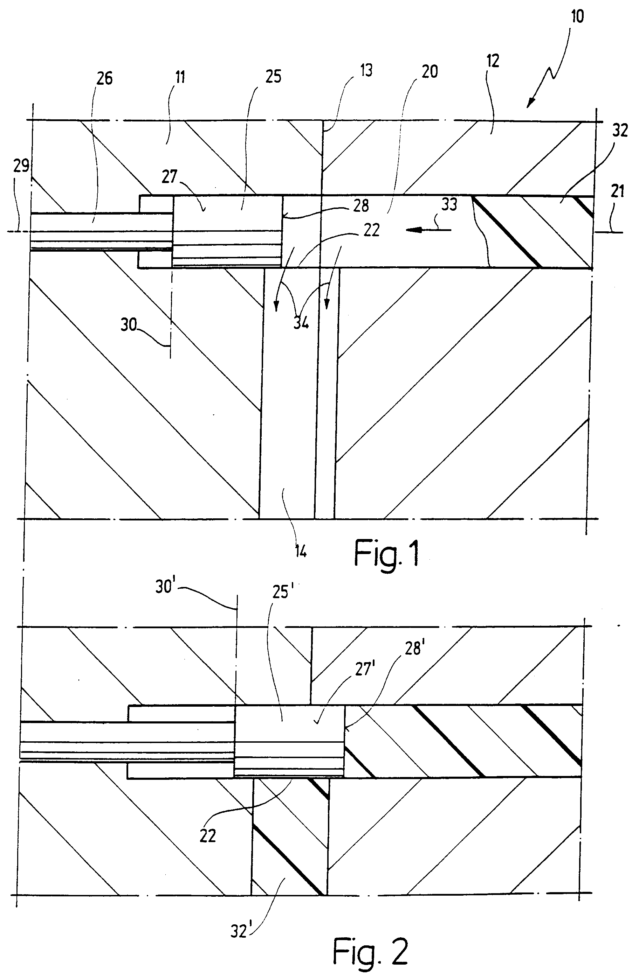

In Fig. 1 bezeichnet 10 ein Werkzeug für eine im übrigen nicht dargestellte Kunststoff-Spritzgießmaschine. Das Werkzeug 10 umfaßt eine erste Werkzeughälfte 11 sowie eine zweite Werkzeughälfte 12. Die Anordnung ist dabei so vorgesehen, daß ein (nicht dargestelltes) Kunststoff-Spritzgießaggregat in Fig. 1 von rechts mit der zweiten Werkzeughälfte 12 verbunden ist. Die zweite Werkzeughälfte 12 wird daher in der Fachwelt als "warme" Werkzeughälfte, die in Fig. 1 linke, erste Werkzeughälfte 11 wird demgegenüber als "kalte" Werkzeughälfte bezeichnet.

Die Werkzeughälften 11, 12 liegen entlang einer Trennebene 13 aneinander, wenn das Werkzeug 10 geschlossen ist. Ein Formhohlraum 14, dessen Form an die Form des herzustellenden Gegenstand angepaßt ist, ist bei dem in Fig. 1 dargestellten Ausführungsbeispiel so angeordnet, daß er sowohl von der ersten Werkzeughälfte 11 als auch von der zweiten Werkzeughälfte 12 gebildet wird. Die Trennebene 13 verläuft daher durch den Formhohlraum 14 hindurch.

Es versteht sich, daß die in Fig. 1 dargestellte Anordnung ebenso wie die Anordnung der noch folgenden Figuren, insoweit nur beispielhaft zu verstehen ist. Selbstverständlich ist es möglich, das Werkzeug auch mit mehr als zwei Werkzeughälften auszubilden, bspw. als sogenanntes Etagenwerkzeug oder dgl. Auch ist es selbstverständlich möglich, statt eines Formhohlraums 14, der in Fig. 1 ohnehin nur abgebrochen dargestellt ist, eine Vielzahl derartiger Formhohlräume vorzusehen, wie dies an sich alles bekannt ist.

Im Werkzeug 10 ist ein Angußkanal 20 vorgesehen, der die Werkzeughälften 11, 12 in einer Richtung senkrecht zur Trennebene 13 durchsetzt, wie mit einer Achse 21 des Angußkanals 20 angedeutet. Der Angußkanal 20 geht über eine Öffnung 22 in den Formhohlraum 14 über. Die Öffnung 22 kann als Schlitz, als kreisförmiger Querschnitt oder dgl. ausgebildet sein. Bevorzugt ist eine geometrische Formgebung, bei der die Öffnung 22 einen Schlitz bildet, der parallel zur Achse 21 verläuft.

Im Angußkanal 20 läuft ein Ventilkörper, z.B. ein Kolben 25. Der Kolben 25 ist auf seiner in Fig. 1 linken Seite mit einer Kolbenstange 26 versehen. Die zylindrische Umfangsfläche des Kolbens 25 ist mit 27 bezeichnet. Es sei an dieser Stelle angemerkt, daß die zylindrische Form des Kolbens 25 ebenfalls nur beispielhaft zu verstehen ist. Der Kolben 25 kann statt einer kreiszylindrischen Form auch bspw. eine quadratische oder elliptische oder sonstige Querschnittsform aufweisen, wobei die letztgenannten Ausführungsbeispiele zugleich eine Verdrehsicherung des Kolbens 25 bewirken würden.

Die auf der rechten Seite des Kolbens 25 erkennbar Stirnseite 28 bildet zugleich eine Steuerkante relativ zur Öffnung 27, wie noch erläutert werden wird. Mit 29 ist schließlich eine Betätigungseinrichtung angedeutet, bspw. eine Kolben-Zylinder-Einheit, mit der der Kolben 25 axial im Angußkanal 20 verschoben werden kann.

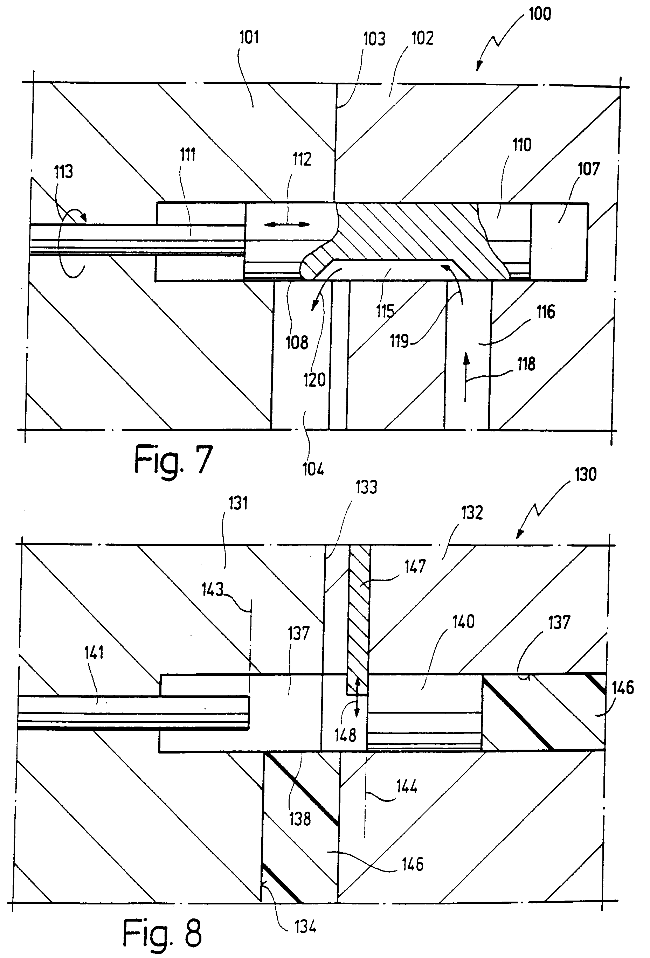

Schließlich ist mit 30 noch angedeutet, daß in der Ebene zwischen Kolbenstange 26 und Kolben 25 entweder eine feste Verbindung oder eine lose Verbindung bestehen kann. Es ist daher durchaus möglich, den Kolben 25 für bestimmte Betriebsarten von der Kolbenstange 26 zu trennen. Dies wird weiter unten anhand von Fig. 8 noch näher erläutert werden.

Schließlich ist in Fig. 1 mit 32 noch eine Kunststoffschmelze angedeutet, die von rechts - von der nicht dargestellten Kunststoff-Spritzgießeinheit kommend - in den Angußkanal 20 eintritt und sich nach links ausbreitet, wie mit einem Pfeil 33 angedeutet. Die Kunststoffschmelze 32 wird dann an der Stirnseite 28 des Kolbens 25 nach unten umgelenkt und strömt durch die vorzugsweise schlitzförmige Öffnung 22 in den Formhohlraum 14 hinein.

Diese in Fig. 1 dargestellte erste Betriebsstellung des Kolbens 25 wird solange beibehalten, wie die Kunststoffschmelze 32 in den Formhohlraum 14 einströmt.

Sobald der Formhohlraum 14 ausgefüllt und die Kunststoffschmelze 32 vorzugsweise noch nachgedrückt ist, um die beim Abkühlen der Kunststoffschmelze 32 eintretende Schrumpfung zu kompensieren, wird der Kolben 25 in die in Fig. 2 dargestellte zweite Betriebsstellung verfahren. In Fig. 2 sind gleiche Komponenten mit gleichen Bezugszeichen versehen, die unterschiedlichen Zustände sind lediglich mit einem hinzugefügten Apostroph gekennzeichnet.

Bei bestimmten Kunststoff-Spritzverfahren wird der Formhohlraum nicht vollständig befüllt, sondern nur mit einer Menge Kunststoffschmelze, die kleiner als dessen Volumen ist. Dies ist z.B. beim sogenannten "Schaumspritzen" der Fall, bei dem die Volumenvergrößerung durch das Aufschäumen der Kunststoffschmelze berücksichtigt werden muß. Beim sogenannten "Spritzprägen" und bei manchen sogenannten "atmenden Werkzeugen" wird der Formhohlraum nach dem Einspritzen der Kunststoffschmelze vergrößert, so daß auch in diesen Fällen eine kleinere Menge an Kunststoffschmelze in den Formhohlraum eingespritzt wird.

Man erkennt aus Fig. 2 deutlich, daß der Kolben 25' mit seiner zylindrischen Umfangsfläche 27' die Öffnung 22 nunmehr vollständig überdeckt. Die als Stirnseite 28 ausgebildete Steuerkante des insoweit als Ventilglied wirkenden Kolbens 25 hat während des Bewegungsvorganges zwischen den in Fig. 1 und Fig. 2 dargestellten Betriebsstellungen den Strang der Kunststoffschmelze 32 bzw. 32', der durch die Öffnung 22 hindurchreichte, abgeschert. Auf diese Weise liegt jetzt die durchgehende, d.h. homogene Umfangsfläche 27' oberhalb der Öffnung 22, so daß die im Formhohlraum 14 jetzt erstarrende Kunststoffschmelze 32' im Bereich der Öffnung 22 eine ebenfalls homogene und damit optisch einwandfreie Oberfläche erhält.

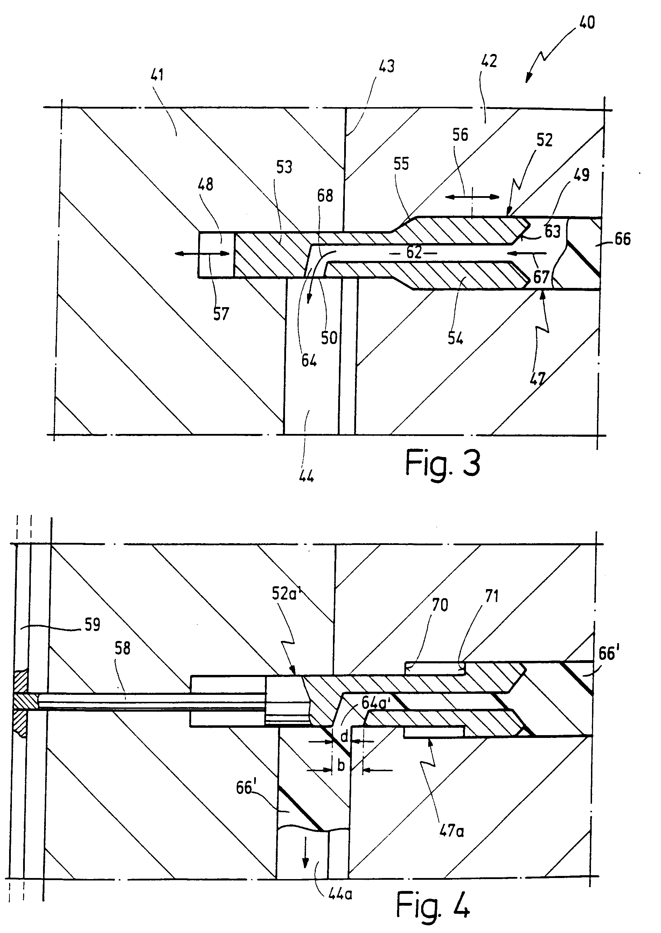

Bei dem in Fig. 3 dargestellten abgewandelten Ausführungsbeispiel ist ein Werkzeug 40 wiederum mit Werkzeughälften 41, 42 versehen, die entlang einer Trennebene 43 aneinanderliegen und zwischen sich einen Formhohlraum 44 einschließen.

Ein Angußkanal 47 weist in diesem Falle einen in Fig. 3 linken, engen Abschnitt 48 sowie einen rechten, weiteren Abschnitt 49 auf. Eine Öffnung 50 verbindet den engen Abschnitt 48 mit dem Formhohlraum 44.

Ein Ventilkörper bzw. Kolben 52 ist ebenfalls stufig ausgebildet. Er weist einen linken, dünnen Abschnitt 53 sowie einen rechten, dickeren Abschnitt 54 auf, die jeweils an die Abschnitte 48, 49 des Angußkanals 47 angepaßt sind. Der Kolben 52 liegt in einem schrägen Übergang 55 axial am Angußkanal 47 an, der an dieser Stelle somit einen axialen Anschlag bildet.

Zur axialen Bewegung des Kolbens 52 sind alternativ eine erste Betätigungseinrichtung 56 oder eine zweite Betätigungseinrichtung 57 vorgesehen. Die erste Betätigungseinrichtung 56 greift seitlich am dickeren Abschnitt 54 des Kolbens 52 an. Die zweite Betätigungseinrichtung 57 greift hingegen an der linken Stirnseite des dünneren Abschnittes 53 des Kolbens 52 an.

Wie man der Variante gemaß Fig. 4 entnehmen kann, ist die zweite Betätigungseinrichtung 57 vorzugsweise wiederum (vgl. Fig. 1 und 2) als Kolbenstange 58 ausgebildet. Die Besonderheit bei der Darstellung gemäß Fig. 4 liegt insoweit noch darin, daß die Kolbenstange 58 zu einer Betätigungsplatte 59 geführt ist. Die Betätigungsplatte 59 ist ähnlich den bekannten Betätigungsplatten für Auswerferstifte in derartigen Werkzeugen so ausgestaltet, daß sie gleichzeitig mehrere derartige Kolbenstangen 58 zu betätigen vermag.

Betrachtet man nun wiederum zunächst das Ausführungsbeispiel gemäß Fig. 3, so erkennt man, daß der Kolben 52 von einem axialen Kanal 62 durchsetzt ist. Der Kanal 62 weist eine erste Mündung 63 auf, die in Fig. 3 rechts mit dem Angußkanal 47 in Verbindung steht. Eine zweite Mündung 64 an dem in Fig. 3 linken Ende des Kanals 62 ist nach unten abgebogen und steht mit der Öffnung 50 zum Formhohlraum 44 in Verbindung.

Wenn eine Kunststoffschmelze 66 von rechts in den Angußkanal 47 einströmt, wie mit einem Pfeil 67 angedeutet, strömt die Kunststoffschmelze 66 in die erste Mündung 63, dann durch den Kanal 62 und schließlich aus der zweiten Mündung 64 durch die Öffnung 50 in den Formhohlraum 44.

Nach Beendigung des Einspritzvorganges, d.h. dann, wenn der Formhohlraum 44 gefüllt ist, wird der Kolben 52 nach rechts verschoben.

Dieser Zustand ist in Fig. 4 für ein leicht abgewandeltes Ausführungsbeispiel illustriert. Bei diesem abgewandelten Ausführungsbeispiel gemäß Fig. 4 sind entsprechende Elemente mit den gleichen Bezugszeichen versehen, Abwandlungen sind jedoch mit einem "a" bezeichnet und die unterschiedliche Betriebsstellung wird durch einen hinzugefügten Apostroph kenntlich gemacht.

In Fig. 4 erkennt man zunächst, daß statt eines schrägen Überganges 55 (Fig. 3) nunmehr radiale Anschläge 70, 71 vorgesehen sind.

Darüber hinaus ist die zweite Mündung 64a' etwas breiter in axialer Richtung ausgebildet, nämlich mit einer Breite b. Wird nun der Kolben 52a' nach rechts verschoben, so bildet die in Fig. 4 rechte Wand des Formhohlraums 44a eine Steuerkante relativ zur zweiten Mündung 64a'. Durch geeignete axiale Positionierung des Kolbens 52a' kann man daher einen Öffnungsquerschnitt im Bereich der zweiten Mündung 64a' einstellen, der in Fig. 4 mit d bezeichnet ist. Der Einspritzvorgang läßt sich auf diese Weise fein justieren.

Wie bereits weiter vorne erwähnt wurde, kann man mit dieser Justiermöglichkeit insbesondere bei Mehrfach-Werkzeugen die Öffnungen der mehreren Formhohlräume unterschiedlich einstellen, und zwar derart, daß alle Formhohlräume synchron befüllt werden.

Wenn der Formhohlraum 44a dann mit Kunststoffschmelze 66' befüllt ist, wird der Kolben 52a' im Angußkanal 47a noch weiter nach rechts verschoben, als dies in Fig. 4 dargestellt ist, so daß auch hier Verhältnisse eingestellt werden, wie zuvor anhand des Ausführungsbeispiels gemäß Fig. 2 erläutert wurden.

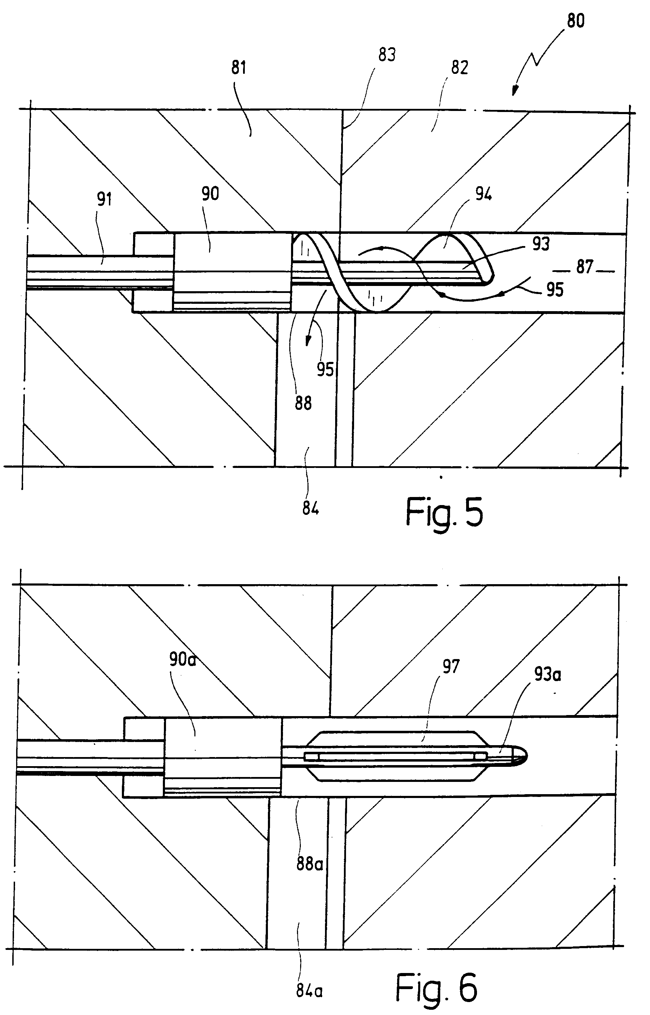

Fig. 5 zeigt ein viertes Ausführungsbeispiel der Erfindung mit einem Werkzeug 80, das Werkzeughälften 81, 82 umfaßt, die entlang einer Trennebene 83 in geschlossenem Zustand aneinanderliegen und zwischen sich einen Formhohlraum 84 einschließen.

Ein Angußkanal 87 ist wiederum ähnlich wie bei den Ausführungsbeispielen der Fig. 1 und 2 ausgebildet. Eine Öffnung 88 führt vom Angußkanal 87 zum Formhohlraum 84. Im Angußkanal 87 läuft ein Ventilkörper bzw. Kolben 90, der mittels einer Kolbenstange 91 betätigt wird.

Das Besondere beim Ausführungsbeispiel gemäß Fig. 5 besteht darin, daß der Kolben 90 an seiner in Fig. 5 rechten Stirnseite mit einer axial vorstehenden Stange 93 kleineren Durchmessers versehen ist. Auf der Stange 93 sitzt eine Schnecke 94. Die Schnecke 94 bewirkt, daß eine von rechts in den Angußkanal 87 eintretende Kunststoffschmelze sich um die Schnecke 94 herum ausbreiten muß, wie mit einem gewendelten Pfeil 95 angedeutet. Durch diese Ausbreitung der Kunststoffschmelze wird eine Vermischung innerhalb der Kunststoffschmelze erreicht und damit eine Homogenisierung.

Eine ähnliche Wirkung kann auch mit einem Mischsieb (nicht dargestellt) erzielt werden.

Bei der in Fig. 6 dargestellten Variante dieses Ausführungsbeispiels, in der gleiche Elemente durch Hinzufügen eines "a" gekennzeichnet sind, wird statt einer Schnecke eine Mehrzahl radialer Mischflügel 97 eingesetzt, die seitlich und radial von der Stange 93a abstehen. In diesem Falle tritt eine Vermischung der anströmenden Kunststoffschmelze dadurch ein, daß sich die Öffnung 88a in Fig. 6 unterhalb der Stange 93a mit den Mischflügeln 97 befindet. Diejenigen Anteile der Kunststoffschmelze, die in der Darstellung von Fig. 6 oberhalb der Stange 93a von rechts nach links strömen, müssen daher seitlich an den Mischflügeln 97 vorbeiströmen, um nach unten in die Öffnung 88a zu gelangen. Auch auf diese Weise wird ein Mischeffekt erzielt.

Fig. 7 zeigt ein sechstes Ausführungsbeispiel der Erfindung mit einem Werkzeug 100, das zwei Werkzeughälften 101, 102 umfaßt, die entlang einer Trennebene 103 aneinanderliegen und einen Formhohlraum 104 einschließen.

Auch in diesem Fall ist ein Angußkanal 107 vorgesehen, der über eine Öffnung 108 mit dem Formhohlraum 104 in Verbindung steht.

Das Besondere bei diesem Ausführungsbeispiel besteht darin, daß der Angußkanal 107 in der zweiten Werkzeughälfte 102 nach rechts abgeschlossen ist.

Ein Ventilkörper bzw. Kolben 110 läuft im Angußkanal 107 und ist von seiner linken Seite her mittels einer Kolbenstange 111 betätigbar.

Wie mit einem Pfeil 112 angedeutet, kann der Kolben 110 in Axialrichtung des Angußkanals 107 verschoben werden, wie dies bereits mehrfach erläutert wurde. Alternativ ist aber auch möglich, den Kolben 110 um die Achse des Angußkanals 107 zu verdrehen. Dies ist in Fig. 7 mit einen Pfeil 113 angedeutet.

Der Kolben 110 ist an seiner Unterseite mit einer Längsnut 115 versehen, die sich in axialer Richtung über einen Teil seiner zylindrischen Umfangsfläche erstreckt. Die Längsnut 115 ist in ihrer axialen Länge so ausgebildet, daß sie in der in Fig. 7 dargestellten Betriebsstellung die Öffnung 108 zum Formhohlraum 104 mit einem Zuführkanal 116 verbindet. Der Zuführkanal 116 ist radial zum Angußkanal 107 gerichtet und mündet in diesen in der Nähe von dessen in Fig. 7 rechtem Ende ein.

Eine von unten in den Zuführkanal 116 eintretende Kunststoffschmelze fließt dort in Richtung eines Pfeils 118. Die Kunststoffschmelze tritt dann, wie mit einem Pfeil 119 angedeutet, in die Längsnut 115 des Kolbens 110 ein und wird dabei um 90° umgelenkt. Am linken Ende der Längsnut 115 tritt die Kunststoffschmelze, wie mit einem Pfeil 120 angedeutet, durch die Öffnung 108 in den Formhohlraum 104 ein. Sie wird dabei wiederum um 90° umgelenkt.

Durch axiales Verschieben des Kolbens 110 (Pfeil 112) und/oder durch Verdrehen des Kolbens 110 (Pfeil 113) kann nun die Position der Längsnut 115 relativ zu Öffnung 108 und Zuführkanal 116 so verändert werden, daß über die sich dabei ergebenden Steuerkanten der Zustrom der Kunststoffschmelze beeinflußt wird. Wenn der Formhohlraum 104 mit Kunststoffschmelze ausgefüllt ist und diese ggf. nachgedrückt wurde, kann die Öffnung 108 dadurch verschlossen werden, daß der Kolben 110 entweder weiter nach rechts verschoben oder so weit gedreht wird, daß die Längssnut 115 die Öffnung 108 nicht mehr überdeckt. Die Kunststoffschmelze wird dabei entlang der Öffnung 108 bzw. quer zur Öffnung 108 abgeschert.

Bei dem in Fig. 8 dargestellten siebten Ausführungsbeispiel der Erfindung ist ein Werkzeug 130 mit zwei Werkzeughälften 131, 132 vorgesehen, die entlang einer Trennebene 133 aneinanderliegen und zwischen sich einen Formhohlraum 134 einschließen.

Ein Angußkanal 137 ist entsprechend dem bereits erläuterten Ausführungsbeispiel gemäß Fig. 1 und 2 ausgebildet. Er steht über einer Öffnung 138 mit dem Formhohlraum 134 in Verbindung.

Ein Ventilkörper bzw. Kolben 140 ist mit einer Kolbenstange 141 versehen. Allerdings liegt die Kolbenstange 141, wie bereits oben zu Fig. 1 und 2 angedeutet wurde, nur lose am Kolben 140 an, wie mit Ebenen 143 und 144 angedeutet.

Betrachtet man zum besseren Verständnis des Werkzeugs 130 gemäß Fig. 8 nochmals das Ausführungsbeispiel gemäß Fig. 1 und 2, so sei angenommen, daß bei dem Werkzeug 10 gemäß Fig. 1 und 2 die Betriebsstellung in Fig. 2 erreicht wurde. Der Formhohlraum 104 ist daher mit Kunststoffschmelze 146 ausgefüllt.

Zum Entformen des so hergestellten Kunststoffteils muß nun das Werkzeug 130 entlang der Trennebene 133 geöffnet werden.

Um zu verhindern, daß während der Offenzeit des Werkzeugs 130 flüssige Kunststoffschmelze 146 von rechts aus dem Angußkanal 137 austritt und damit das Werkzeug bzw. die Spritzgießmaschine verschmutzt, ist es zweckmäßig, den Kolben 140 vor dem Öffnen des Werkzeugs 130 so weit nach rechts zu verschieben, wie dies in Fig. 8 angedeutet ist. Der Kolben 140 dient dann als Verschlußstopfen, der den Angußkanal 137 nach links absperrt.

Da die Kolbenstange 141 mit der zugehörigen (nicht dargestellten) Betätigungseinrichtung jedoch in der ersten, nämlich der "kalten" Werkzeughälfte 131 angeordnet ist, andererseits der Kolben 140 aber in der "warmen", zweiten Werkzeughälfte 132 verbleiben soll, muß die Kolbenstange 141 vom Kolben 140 getrennt werden. Dies ist in einfacher Weise dadurch möglich, daß die erste Werkzeughälfte 131 einfach von der zweiten Werkzeughälfte 132 weg gefahren wird. Da die Kolbenstange 141, wie erwähnt, nur lose am Kolben 140 anliegt, werden die beiden Elemente getrennt, wie man deutlich aus Fig. 8 erkennen kann. Die Kolbenstange 141 kann selbstverständlich auch mittels der Betätigungseinrichtung nach links verfahren werden, um die gewünschte Trennung herbeizuführen.

Der Kolben 140 sitzt nun ebenfalls lose im Angußkanal 137. Sofern daher von rechts ein Druck der Kunststoffschmelze 146 auf den Kolben 140 einwirkt, würde dieser nach links aus dem Angußkanal 137 herausgedrückt werden.

Um dieses zu verhindern, ist eine Riegelstange 147 vorgesehen, die in Fig. 8 von oben radial zur Achse des Angußkanals 137 verschiebbar ist, wie mit einem Pfeil 148 angedeutet.

Sobald die in Fig. 8 eingezeichnete Verschlußstellung des Kolbens 140 erreicht ist, wird die Riegelstange 147 nach unten verfahren, und zwar so weit, daß sie die linke Stirnseite des Kolbens 140 teilweise überdeckt. Der Kolben 140 ist damit verriegelt und stellt damit einen sicheren Verschluß für den Angußkanal 137 dar.

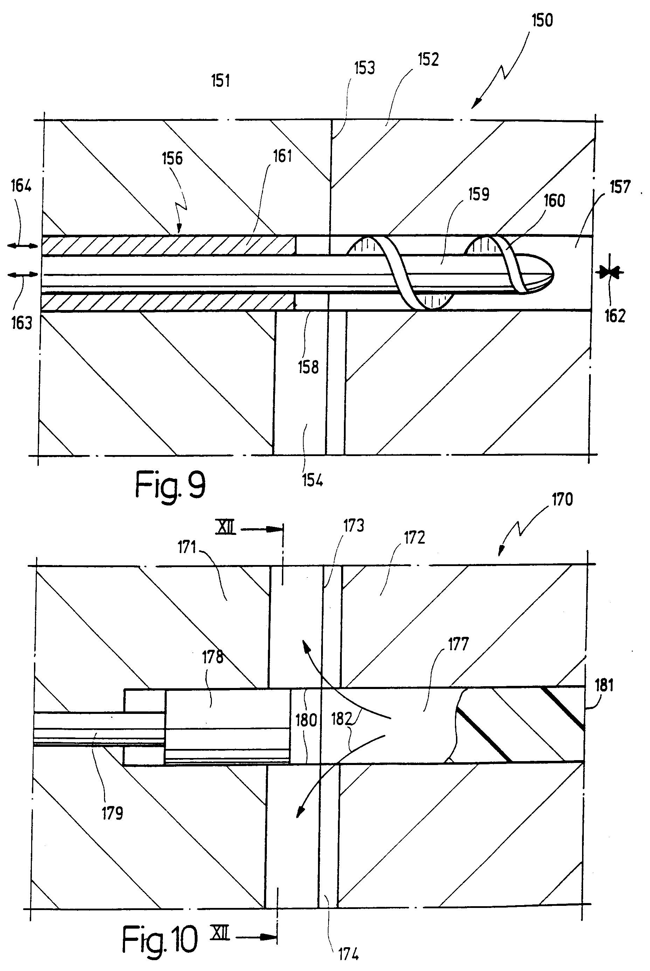

Fig. 9 zeigt ein achtes Ausführungsbeispiel der Erfindung mit einem Werkzeug 150, das Werkzeughälften 151, 152 umfaßt, die entlang einer Trennebene 153 aneinanderliegen und zwischen sich einen Formhohlraum 154 einschließen.

Eine insgesamt mit 156 bezeichnete Ventilkörper- bzw. Kolbenanordnung läuft in einem Angußkanal 157. Der Angußkanal 157 geht über eine Öffnung 158 in den Formhohlraum 154 über.

Die Kolbenanordnung 156 umfaßt eine dünne Stange 159, an deren rechtem freien Ende sich eine Schnecke 160, ähnlich wie beim Ausführungsbeispiel gemäß Fig. 5, befindet.

Um die Stange 159 herum ist ein Nachdrück-Ringkolben 161 angeordnet. Wie mit Pfeilen 163 und 164 angedeutet, sind die Stange 159 mit Schnecke 160 einerseits und der Nachdrück-Ringkolben 161 andererseits separat axial verstellbar. In die Verbindung vom Angußkanal 157 zu dem (nicht dargestellten) Kunststoff-Spritzgießaggregat ist ein Ventil 162 oder ein anderes Element zum Absperren dieser Verbindung geschaltet.

Beim Betrieb des Werkzeugs 150 bleibt der Nachdrück-Ringkolben 161 zunächst in der in Fig. 9 eingezeichneten linken Stellung, bis eine Kunststoffschmelze den Formhohlraum 154 ausgefüllt hat. Das Ventil 162 bzw. Absperrelement wird nun geschlossen. Der Nachdrück-Ringkolben 161 wird dann so weit nach rechts verschoben, wie dies zum Nachdrucken der Kunststoffschmelze erforderlich ist, um die Schrumpfung während des anfänglichen Abkühlvorganges der Kunststoffschmelze zu kompensieren. Die Stange 159 mit der Schnecke 160 bleiben während des Vorschiebens des Nachdrück-Ringkolbens 161 in ihrer eingezeichneten Stellung.

Fig. 10 zeigt ein neuntes Ausführungsbeispiel der Erfindung. Ein Werkzeug 170 umfaßt Werkzeughälften 171, 172, die entlang einer Trennebene 173 aneinander angrenzen und einen Formhohlraum 174 zwischen sich einschließen.

Ein Angußkanal 177 entspricht im wesentlichen der Konfiguration des eingangs erläuterten Ausführungsbeispiels gemäß Fig. 1 und 2. Im Angußkanal 177 läuft wiederum ein Ventilkörper bzw. Kolben 178, der mittels einer Kolbenstange 179 linear auslenkbar ist.

Das besondere bei diesem Ausführungsbeispiel besteht darin, daß der Formhohlraum 174 nicht nur einseitig sondern vielmehr an mehreren Seiten oder sogar über den ganzen Umfang des Angußkanals 177 hinweg an diesen angrenzt. Demzufolge gibt es entweder eine durchgehende Öffnung 180, die über den Umfang des Angußkanals 177 durchgeht oder es gibt mehrere, bspw. zwei oder vier Öffnungen 180, die zu mehreren separaten Formhohlräumen führen.

Wenn eine Kunststoffschmelze 181 durch den Angußkanal 177 strömt, verteilt sich diese, wie mit Pfeilen 182 angedeutet, in mehrere Richtungen radial zur Achse des Angußkanals 177.

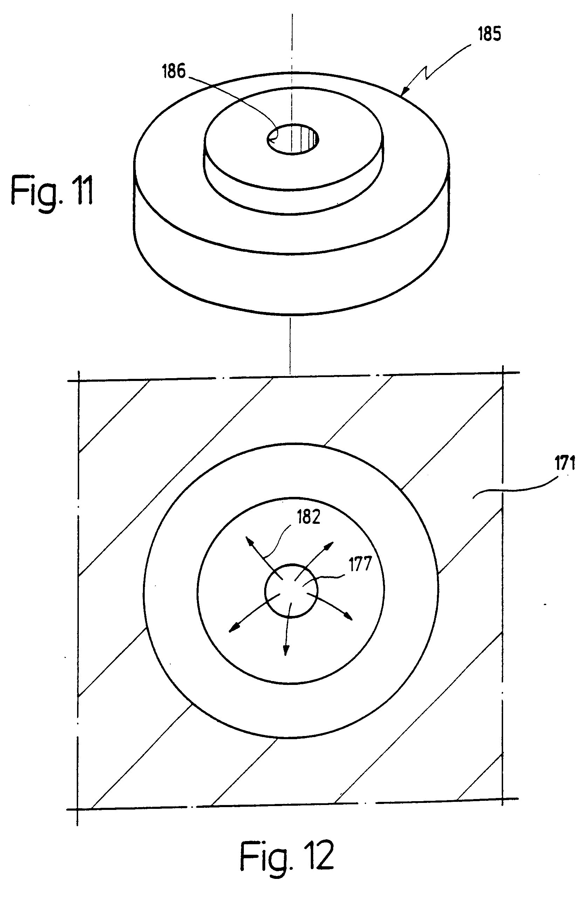

Die Anordnung gemäß Fig. 10 kann bspw. zur Herstellung eines Rades, einer Rolle oder dgl. eingesetzt werden, wie dies perspektivisch in Fig. 11 mit 185 dargestellt ist. Das Rad 185 ist von rotationssymmetrischer Gestalt. Es weist eine Bohrung 186 auf, die im dargestellten Beispielsfall zentral angeordnet ist. Zur Herstellung des Rades 185 wird der Formhohlraum 174 im Werkzeug 170 so angeordnet, daß die Bohrung 186 mit dem Angußkanal 177 fluchtet. Wenn, wie in Fig. 10 dargestellt, während des Einspritzvorganges der Kolben 178 in der nach links ausgerückten Stellung ist, kann die Kunststoffschmelze 181 aus dem Angußkanal 177 in radialer Richtung frei ausströmen, wie besonders deutlich aus der Seitenansicht gemäß Fig. 12 zu erkennen ist. Sobald der Formhohlraum 174 gefüllt ist, wird der Kolben 178 nach rechts verschoben, so daß einerseits der Angußkanal 177 vom Formhohlraum 174 unter Abscherung des verbleibenden Kunststoffstranges abgetrennt wird. Andererseits entsteht bei vorgeschobenem Kolben 178 im erstarrten Rad 185 die bereits erwähnte Bohrung 186, da sich an dieser Stelle der Kolben 178 befindet. Zum Ausformen des Rades 185 aus dem Werkzeug 170 wird der Kolben 178 dann zurückgezogen, so daß das Rad 185 dann in einfacher Weise mittels üblicher Auswerferstifte ausgeworfen werden kann.

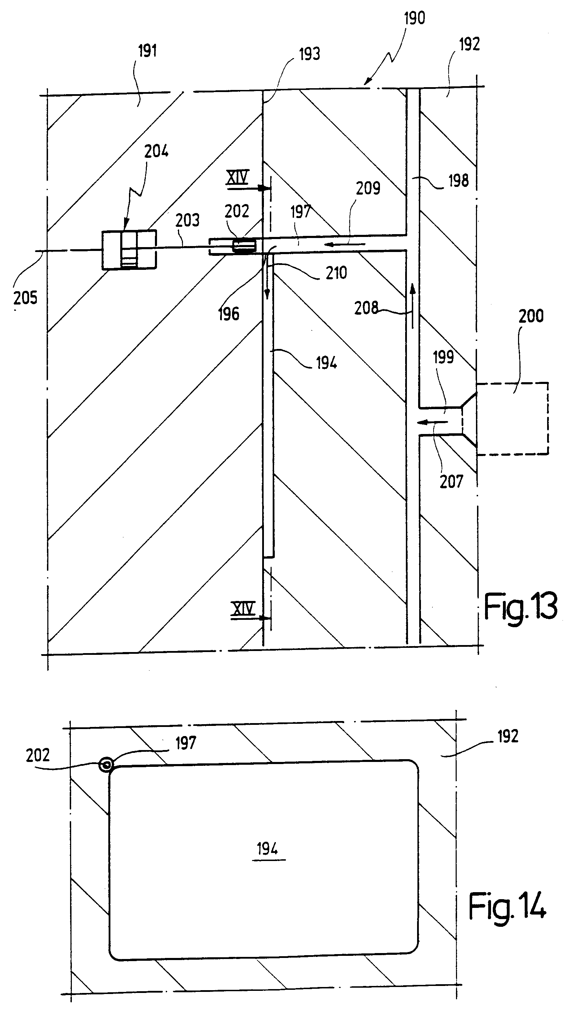

Fig. 13 zeigt ein zehntes Ausführungsbeispiel der Erfindung, jedoch in wesentlich kleinerem Maßstab. Ein Werkzeug 190 umfaßt Werkzeughälften 191, 192, die entlang einer Trennebene 193 aneinander anliegen und zwischen sich einen Formhohlraum 194 einschließen. Der Formhohlraum 194 ist bei diesem Ausführungsbeispiel nur in der zweiten Werkzeughälfte 192 ausgeformt.

Eine Öffnung 196 stellt wiederum einen Übergang zu einem Angußkanal 197 der bereits beschriebenen Art her. Der Angußkanal 197 steht wiederum in Verbindung mit einem Zuführkanal 198. Der Zuführkanal 198 kann ein einfacher (ungeheizter) Verteilerkanal sein. Es kann sich dabei aber auch um ein beheiztes Kanalsystem, ein sogenanntes Manifold, handeln.

Der Zuführkanal 198 ist mit einer Anschlußöffnung 199 für ein nur äußerst schematisch angedeutetes Kunststoff-Spritzgießaggregat 200 versehen.

Im Angußkanal 197 läuft ein Ventilkörper bzw. Kolben 202, der von einer Kolbenstange 203 betätigt wird. Die Kolbenstange 203 steht wiederum mit einer Kolben-Zylinder-Einheit 204 in Verbindung, die ihrerseits mittels einer Steuerleitung 205 betätigbar ist.

Aus der Darstellung gemäß Fig. 13 folgt deutlich, daß der Kolben 202 zusammen mit seinen Betätigungselementen, nämlich der Kolbenstange 203 sowie der Kolben-Zylinder-Einheit 204 sich insgesamt in der ersten Werkzeughälfte 191, d.h. der "kalten" Werkzeughälfte befindet. Die zweite Werkzeughälfte 192, die "warme" Werkzeughälfte, ist hingegen mit dem Kunststoff-Spritzgießaggregat 200 verbunden. Die beiden genannten Aggregate sind somit in unterschiedlichen Werkzeughälften untergebracht und damit räumlich und thermisch voneinander entkoppelt.

Wenn das Kunststoff-Spritzgießaggregat 200 betätigt wird, strömt eine bestimmte Menge einer Kunststoffschmelze in Richtung eines Pfeils 207 in den Zuführkanal 198 und von dort (Pfeil 208) in den Angußkanal 197 (Pfeil 209). Die Kunststoffschmelze wird dann um 90° umgelenkt (Pfeil 210) und strömt in den Formhohlraum 194. Im übrigen ist die Funktion des Ausführungsbeispiels gemäß Fig. 13 mit der der Ausführungsbeispiele gemäß Fig. 1 und 2 vergleichbar.

Der Formhohlraum 194 hat beim Ausführungsbeispiel gemäß Fig. 13 und 14 die Gestalt einer Scheckkarte, insbesondere einer sogenannten Smart Card. Zu diesem Zweck befindet sich der Angußkanal 197 in einer Position, in der er an eine abegrundete Ecke des Formhohlraums 194 angrenzt. Wenn der Angußkanal 197 eine kreiszylindrische Gestalt hat, entsteht dabei eine geringfügige Durchdringung des Kreiszylinders (Angußkanal 197) mit dem Kreiszylinder der abgerundete Ecke des Formhohlraums 194. Es versteht sich jedoch, daß der Angußkanal 197, ebenso wie die Angußkanäle der übrigen geschilderten Ausführungsbeispiele, auch einen anderen Querschnitt haben kann, bspw. einen quadratischen oder einen elliptischen Querschnitt.

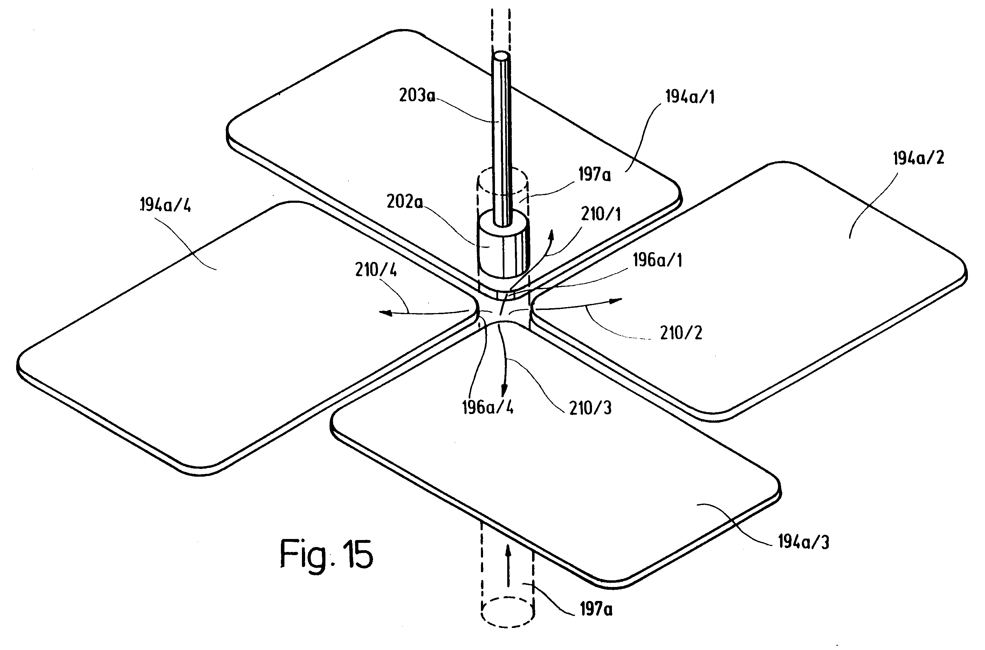

Fig. 15 zeigt schließlich noch eine Variante des Ausführungsbeispiels gemäß der Fig. 13 und 14, bei dem - wie bereits zum Ausführungsbeispiel der Fig. 10 bis 12 angedeutet - ein Angußkanal an mehrere Formhohlräume angeschlossen sein kann. In Fig. 15 sind entsprechende Elemente mit denselben Bezugszeichen bezeichnet, wobei jedoch ein "a" im Vergleich zur Darstellung der Fig. 13 und 14 hinzugefügt wurde.

Man erkennt, daß beim Ausführungsbeispiel gemäß Fig. 15 insgesamt vier Formhohlräume 194a/1 bis 194a/4 kleeblattartig in einer Radialebene zur Achse des Angußkanals 197a angeordnet sind. Vom Angußkanal 197a führen insgesamt vier Öffnungen 196a/1 bis 196a/4 zu den Formhohlräumen 194a/1 bis 194a/4. Der axial verschiebbare Kolben 202a, der mittels der Kolbenstange 203a auslenkbar ist, kann somit sämtliche Öffnungen 196a/1 bis 196a/4 freigeben oder verschließen, wie dies bereits angedeutet wurde. Im Ergebnis können auf diese Weise über einen einzigen Angußkanal vier Scheckkarten gespritzt werden oder bei anderen Anwendungsfällen eine noch größere Anzahl bestimmter Kunststoffteile.

## Patentansprüche

1. Verfahren zum Spritzgießen von Kunststoffteilen, bei dem eine Kunststoffmasse (32; 66; 146; 181) aus einem Angußkanal (20; 47; 87; 137; 157; 177; 197) über eine Öffnung (22; 50; 88; 138; 158; 180; 196) in einen Formhohlraum (14; 44; 84; 134; 154; 174; 194) eines Werkzeugs (10; 40; 80; 130; 150; 170; 190) eingespritzt wird, wobei nach dem Befüllen des Formhohlraums (14; 44; 84; 134; 154; 174; 194) mit der Kunststoffmasse (32; 66; 146; 181) die Kunststoffmasse (32; 66; 146; 181) mittels einer über die Öffnung (22; 50; 88; 138; 158; 180; 196) hinweg führbaren Steuerkante (28) abgeschert wird, dadurch gekennzeichnet, daß die Kunststoffmasse (32; 66; 146; 181) mittels eines im Angußkanal (20; 47; 87; 137; 157; 177; 197) verschiebbaren und mit der Steuerkante (28) versehenen Kolbens (25; 52; 90; 110; 140; 156; 178; 202) abgeschert wird.

2. Verfahren nach Anspruch 1, dadurch gekennzeichnet, daß die Kunststoffmasse (32; 66; 146; 181) in ihrem Zustand als noch nicht erstarrte Kunststoffschmelze abgeschert wird.

3. Verfahren nach Anspruch 1 oder 2, dadurch gekennzeichnet, daß die Kunststoffmasse (32; 66; 146; 181) in einer ersten axialen Richtung (33; 67; 209) in den Angußkanal (20; 47; 87; 137; 157; 177; 197) einströmt und daß der Kolben (25; 52; 90; 110; 140; 156; 178; 202) zum Abscheren der Kunststoffmasse (32; 66; 146; 181) in der entgegengesetzten, zweiten axialen Richtung (112) verschiebbar ist.

4. Verfahren nach einem oder mehreren der Ansprüche 1 bis 3,, dadurch gekennzeichnet, daß die Kunststoffmasse (32; 66; 146; 181) nachgedrückt und zugleich abgeschert wird.

5. Verfahren nach einem oder mehreren der Ansprüche 1 bis 4, dadurch gekennzeichnet, daß nach dem Befüllen des Formhohlraums (14; 44; 84; 104; 134; 154; 174; 194) und vor dem Abscheren die Kunststoffmasse nachgedrückt wird.

6. Verfahren nach einem oder mehreren der Ansprüche 1 bis 5, dadurch gekennzeichnet, daß die Öffnung (22; 50; 88; 108; 138; 158; 180; 196) während des Abschervorganges mit einer durchgehenden Oberfläche verschlossen wird.

7. Verfahren nach einem oder mehreren der Ansprüche 1 bis 5, dadurch gekennzeichnet, daß während des Einspritzens der Kunststoffmasse (66') die Größe der Öffnung (64a') eingestellt wird.

8. Verfahren nach einem oder mehreren der Ansprüche 1 bis 7, dadurch gekennzeichnet, daß die Kunststoffmasse vor dem Einspritzen durch die Öffnung (88; 88a; 158) vermischt wird.

9. Verfahren nach einem oder mehreren der Ansprüche 1 bis 8, dadurch gekennzeichnet, daß der Angußkanal (137) nach dem Befüllen des Formhohlraums (134) verschlossen wird.

10. Verfahren nach einem oder mehreren der Ansprüche 1 bis 9, dadurch gekennzeichnet, daß die Kunststoffmasse aus dem Angußkanal (197a) gleichzeitig über mehrere Öffnungen (196a/1 bis 196a/4) in mehrere Formhohlräume (194a/1 bis 194a/4) eingespritzt wird.

11. Werkzeug zum Spritzgießen von Kunststoffteilen mit einem Formhohlraum (14; 44; 84; 104; 134; 154; 174; 194), der über mindestens eine Öffnung (22; 50; 88; 108; 138; 158; 180; 196) mit einem Angußkanal (20; 47; 87; 107; 137; 157; 177; 197) in Verbindung steht, wobei der Angußkanal (20; 47; 87; 107; 137; 157; 177; 197) mit einem Kunststoff-Spritzgießaggregat (200) verbindbar ist, und wobei ferner zum Abscheren der Kunststoffmasse (32; 66; 146; 181) nach dem Befüllen des Formhohlraumes ( 14; 44; 84; 134; 154; 174; 194) eine Steuerkante (28) über die Öffnung (22; 50; 88; 138; 158; 180; 196) hinweg führbar ist, dadurch gekennzeichnet, daß im Angußkanal (20; 47; 87; 107; 137; 157; 177; 197) ein mit der Steuerkante (28) versehener Kolben (25; 52; 90; 110; 140; 156; 178; 202) verschiebbar angeordnet ist, der über die Öffnung (22; 50; 88; 108; 138; 158; 180; 196) hinweg führbar ist.

12. Werkzeug nach Anspruch 11, dadurch gekennzeichnet, daß der Angußkanal (20; 47; 87; 137; 157; 177; 197) aus einer ersten axialen Richtung (33; 67; 209) mit der Kunststoffmasse (32; 66; 146; 181) beschickbar ist, und daß der Kolben (25; 52; 90; 110; 140; 156; 178; 202) zum Abscheren der Kunststoffmasse (32; 66; 156; 181) in der entgegegengesetzten, zweiten axialen Richtung (112) über die Öffnung (22; 50; 88; 108; 138; 158; 180; 196) hinweg führbar ist.

13. Werkzeug zum Spritzgießen von Kunststoffteilen mit einer ersten Werkzeughälfte (11; 101; 191) und mit einer zweiten Werkzeughälfte (12; 102; 192), die im geschlossenen Zustand des Werkzeugs (10; 100; 190) entlang einer Trennebene (13; 103; 193) aneinanderliegen und einen Formhohlraum (14; 104; 194) zwischen sich einschließen, der über mindestens eine Öffnung (22; 108; 196) mit einem Angußkanal (20; 107; 197) in Verbindung steht, wobei der Angußkanal (20; 107; 197) mit einem Kunststoff-Spritzgießaggregat (200) verbindbar ist, und Mittel zum Unterbrechen der Verbindung zwischen dem Kunststoff-Spritzgießaggregat (200) und dem Formhohlraum (14; 104; 194) vorgesehen sind, dadurch gekennzeichnet, daß eine Betätigungseinheit für die Unterbrechungsmittel in der ersten Werkzeughälfte (11; 101; 191) angeordnet ist und daß das Kunststoff-Spritzgießaggregat (200) an die zweite Werkzeughälfte (12; 102; 192) angeschlossen ist.

14. Werkzeug nach Anspruch 13, dadurch gekennzeichnet, daß die Unterbrechungsmittel als im Angußkanal laufender Kolben (25; 110; 202) ausgebildet sind.

15. Werkzeug nach Anspruch 14, dadurch gekennzeichnet, daß der Kolben (25; 110; 202) im offenen Zustand des Werkzeugs (10; 100; 190) von der Betätigungseinheit getrennt ist und in der zweiten Werkzeughälfte (12; 102; 192) verbleibt.

16. Werkzeug nach Anspruch 15, dadurch gekennzeichnet, daß die Betätigungseinheit als Kolbenstange (26; 111; 203) ausgebildet ist, die lose am Kolben (25; 110; 202) anliegt.

17. Werkzeug nach einem oder mehreren der Ansprüche 11 bis 16, dadurch gekennzeichnet, daß der Kolben (52; 52a) im Angußkanal gegen einen Anschlag (55; 70/71; 147) anlegbar ist.

18. Werkzeug nach einem oder mehreren der Ansprüche 11 bis 17, dadurch gekennzeichnet, daß der Angußkanal (137) einen Riegel (147) für den Kolben (140) aufweist.

19. Werkzeug nach einem oder mehreren der Ansprüche 11 bis 18, dadurch gekennzeichnet, daß der Kolben (110) eine Längsnut (115) aufweist und um seine Längsachse drehbar (113) angeordnet ist.

20. Werkzeug nach einem oder mehreren der Ansprüche 11 bis 19, dadurch gekennzeichnet, daß der Kolben als Kolbenanordnung (156) mit einer zentralen Stange (159) und einem auf der Stange (159) laufenden Ringkolben (161) ausgebildet ist, wobei die Stange (159) und der Ringkolben (161) separat axial betätigbar sind, und daß Mittel (162) zum Absperren der Verbindung zwischen Angußkanal (157) und Kunststoff-Spritzgießaggregat (200) vorgesehen sind.

21. Werkzeug nach einem oder mehreren der Ansprüche 11 bis 20, dadurch gekennzeichnet, daß der Kolben (52, 52a) eine mit der Öffnung (50) in Verbindung bringbare Mündung (64; 64a) umfaßt, wobei die Mündung (64, 64a) durch Bewegung des Kolbens (52, 52a) in teilweise Überlappung (d/B) mit der Öffnung (50) bringbar ist.

22. Werkzeug nach einem oder mehreren der Ansprüche 11 bis 21, dadurch gekennzeichnet, daß der Kolben (90; 90a; 156) an seiner von der Kunststoffmasse angeströmten Seite mit Mischelementen versehen ist.

23. Werkzeug nach Anspruch 22, dadurch gekennzeichnet, daß die Mischelemente als Schnecke (94; 160) ausgebildet sind.

24. Werkzeug nach Anspruch 23, dadurch gekennzeichnet, daß die Mischelemente als radiale Mischflügel (97) ausgebildet sind.

25. Werkzeug nach Anspruch 22, dadurch gekennzeichnet, daß die Mischelemente als Mischsiebe ausgebildet sind.

26. Werkzeug nach einem oder mehreren der Ansprüche 11 bis 25, dadurch gekennzeichnet, daß der Kolben (52; 52a) einen im wesentlichen axial verlaufenden Kanal (62) aufweist, der an einem Ende mit dem Angußkanal (49) und an seinem anderen Ende mit der Öffnung (50) verbindbar ist.

27. Werkzeug nach einem oder mehreren der Ansprüche 11 bis 26, dadurch gekennzeichnet, daß die Öffnung (180) als Ringspalt ausgebildet ist.

28. Werkzeug nach einem oder mehreren der Ansprüche 11 bis 26, dadurch gekennzeichnet, daß die Öffnung (180) als Mehrzahl von Einzelöffnungen (196a/1 bis 196a/4) ausgebildet ist.

29. Werkzeug nach einem oder mehreren der Ansprüche 11 bis 28, dadurch gekennzeichnet, daß eine Mehrzahl von Kolben mittels einer gemeinsamen Betätigungseinheit betätigbar ist.

30. Werkzeug nach Anspruch 29, dadurch gekennzeichnet, daß die gemeinsame Betätigungseinheit als Betätigungsplatte (59) ausgebildet ist.

31. Werkzeug nach einem oder mehreren der Ansprüche 11 bis 30, dadurch gekennzeichnet, daß der Formhohlraum (194) die Gestalt einer Scheckkarte aufweist.
